# EUROPEAN PATENT APPLICATION

(11) **EP 3 575 207 A1**
(43) Date of publication of application: **04.12.2019**
(21) Application number: 19176867.0
(22) Date of filing: 28.05.2019
(51) Int. Cl.: B64C 9/22, B64C 13/28

(54) **SYSTEM FOR DRIVING A FLAP ARRANGEMENT BETWEEN A RETRACTED POSITION AND AN EXTENDED POSITION**

(30) Priority: 01.06.2018 DE 102018113142
(71) Applicant: Airbus Operations GmbH, 21129 Hamburg (DE)
(72) Inventor: Gibbert, Markus, 21129 Hamburg (DE); Coskovic, Blazenko, 28219 Bremen (DE)
(74) Representative: LKGLOBAL Lorenz & Kopf PartG mbB Patentanwälte

(57) **Abstract**

A flap system (2) for driving a flap arrangement between a retracted position and an extended position comprises a main flap (8), a covering flap (10), a main link (12), an auxiliary link (16) and a connecting link (14), wherein the main link (12) comprises a first main link joint (26) for rotatably supporting the main link (12) on a first structurally fixed point (24), and a second main link joint (27) rigidly coupled with the main flap (8), wherein the connecting link (14) comprises a first connecting link joint (36) for rotatably supporting the connecting link (14) on a second structurally fixed point (38), which is located rearward of the first structurally fixed point (26), and further comprises a second connecting link joint (32), wherein the auxiliary link (16) comprises a first auxiliary link joint (32) coupled with the main link (12) at a distance to the first main link joint (26), and further comprises a second auxiliary link joint (30) coupled with the covering flap (10), wherein the second connecting link joint (32) is coupled with the auxiliary link (16) at a third auxiliary link joint (34) between the first auxiliary link joint (32) and the second auxiliary link joint (30), for rotatably supporting the connecting link (14) on the auxiliary link (16), and wherein the connecting link (14), the auxiliary link (16) and the main link (12) are arranged to actively place the covering flap (10) forward of the main flap (8) in a retracted position of the main flap (8) and rearward of the main flap (8) in at least one extended position of the main flap (8).

## Description

### TECHNICAL FIELD

The invention relates to a system for driving a flap arrangement between a retracted position and an extended position, a wing having such a system as well as an aircraft.

### BACKGROUND OF THE INVENTION

In commercial aircraft, often so-called high lift systems are provided on a wing allowing to increase a lift generating area of the wing as well as its camber. Predominantly, these high lift systems comprise a trailing edge flap arrangement and a leading edge flap arrangement. For example, a leading edge flap arrangement comprises a flap that is extended from a recess at an underside of the wing into a position upstream of the wing. For this so-called Krüger flap, numerous different actuation mechanisms exist.

Depending on a storing position of a Krüger flap in its retracted position and the actuation mechanism to extend the Krüger flap into the desired deployed position, an additional cut-out or recess is required in the fixed leading edge to allow an actuation mechanism to reach a maximum deployed position. This cut-out needs to be sealed in order to maintain a smooth outer surface for cruise flight conditions. Typically, these cut-outs are closed by elastomeric seals.

In an alternative solution, the gap is at least partially sealed through a gap covering flap, which is moved between an open and a closed position through the action of a main flap.

DE 10 2008 056 655 A1 shows a gap covering device and an adjusting mechanism for a gap covering device, which is actuated through an arrangement that includes a prestressed lever moved by a flap.

### SUMMARY OF THE INVENTION

A device that closes a cut-out in a leading edge of a wing for an actuation mechanism coupled with a leading edge Krüger flap that neither requires an elastomer seal nor a complicated mechanism for deploying a covering flap may be helpful.

Therefore, it is an object of the invention to propose a system for driving a flap arrangement that allows to extend and retract a flap and to seal cut-outs required for an actuation mechanism for the flap, while the covering flap actuation mechanism shall be as simple as possible.

The object is met by a flap system for driving a flap arrangement between a retracted position and an extended position having the features of independent claim 1. Advantageous embodiments and further improvements may be gathered from the sub-claims and the following description.

A flap system for driving a flap arrangement between a retracted position and an extended position is proposed. The system comprises a main flap, a covering flap, a main link, an auxiliary link and a connecting link. The main link comprises a first main link joint for rotatably supporting the main link on a first structurally fixed point, and a second main link joint rigidly coupled with the main flap. The connecting link comprises a first connecting link joint for rotatably supporting the connecting link on a second structurally fixed point, which is located rearward of the first structurally fixed point, and further comprises a second connecting link joint. The auxiliary link comprises a first auxiliary link joint coupled with the main link at a distance to the first main link joint, and further comprises a second auxiliary link joint coupled with the covering flap. The second connecting link joint is coupled with the auxiliary link at a third auxiliary link joint between the first auxiliary link joint and the second auxiliary link joint, for rotatably supporting the connecting link on the auxiliary link. Further, the connecting link, the auxiliary link and the main link are arranged to actively place the covering flap forward of the main flap in a retracted position of the main flap and rearward of the main flap in at least one extended position of the main flap.

The main flap may be a flow body having an elongate shape as well as a leading edge and a trailing edge. It may be curved in a similar way to a Krüger flap or another type of flow influencing control surface of an aircraft. In a preferred embodiment, the main flap is a leading edge flap intended to be moved relative to a leading edge of a wing.

The main link is rigidly attached to the main flap and is adapted for moving the main flap between a retracted position and one or more extended positions through rotation of the main link about the first main link joint. When placing the main flap at a leading edge region of a wing, it is intended to snugly fit into a recess on an underside of the wing to close the recess completely and provide a continuous surface. However, by using the main link to move the main flap between usually very distinctly distanced positions, the wing additionally has a cut-out for allowing the main link to move between the retracted position and a fully extended position. The covering flap is provided for closing this additional cut-out by being placed on said cut-out. The covering flap is directly adjacent to the main flap, i.e. directly forward of it, when the main flap is in its retracted position. Hence, the covering flap is a part of the aerodynamic surface in the retracted position of the main flap. The main link may be bent or straight.

According to the invention, the covering flap is exclusively moved through a kinematic arrangement consisting of the auxiliary link, the connecting link and their attachments to the main flap and the second structurally fixed point. This means, that the covering flap is exclusively driven by the main flap and does not require a dedicated drive.

The covering flap is connected to the auxiliary link, which follows a motion given by the connection to the main link as well as the motion restriction through the connecting link that is able to rotate around the second structurally fixed point. As the second structurally fixed point is located rearward of the first structurally fixed point, the motion of the covering flap relative to the main flap also depends on the arrangement of both flaps in the retracted position of the main flap. Preferably, the covering flap is located forward of the main flap in the retracted position of the main flap. Hence, the main link and the connecting link cross each other when the main flap is in the retracted position.

As indicated, the auxiliary link is moved through the induced motion of the first auxiliary link joint and the third auxiliary link joint, thereby defining a motion at the second auxiliary link joint. If the main link is moved into an extended position in a first rotation orientation, the auxiliary link moves at least in a certain motion stage in an opposite rotation direction. Hence, by moving the main flap into a forward direction, the covering flap is moved rearwardly and releases the additional cut-out for allowing the motion of the main link into a forward direction into the cut-out.

In this regard, the "forward" direction is to be understood as a first direction, which may be considered a flight direction when the flap system is attached to an aircraft.

Consequently, the rearward direction is to be considered the opposite direction.

Further, the term "rigidly" is to be understood as firmly holding the main flap or the covering flap, while a rotation or a translational motion of the respective cover relative to the respective link is not permitted.

Additionally, the flap arrangement is to be understood as the main flap and the covering flap.

By using a covering flap to actively close the additional cut-out for accommodating the motion of the main link, additional elastomer seals are not required. The covering flap may be designed such that it snugly fits into the additional cut-out. Further, the cut-out may comprise resting surfaces that at least partially surround the additional cut-out to allow the covering flap to conduct a circumferential contact of the resting surfaces when covering the additional cut-out.

It may also be preferred to arrange the resting surfaces and corresponding contacting surfaces of the covering flap in such manner that the covering flap experiences a certain pre-tension force between the resting surfaces and a rim section of the covering flap. The pre-tension force supports an exact alignment of the covering flap relative to the cut-out.

In an advantageous embodiment, the main link has an L-shape. The L shape may consist of a first leg and a second leg that are connected to each other substantially under a right angle. The first leg and the second leg may comprise different lengths. For example, the first leg may include the first main link joint. The first leg may comprise a greater length than the second leg. With such a setup, the first structurally fixed point may be placed in an upper, forward location of the flap system, wherein the main link extends into a rearward direction. At a rearwardmost position the second leg may extend into a lower direction. Resultantly, the main link may carry the main flap in an upside-down position at a lowermost space of the flap system. An L-shaped main link is commonly found in many leading edge high lift systems of an aircraft. However, such a shape of a main link is not mandatory and any shape is suitable, as long as the main link is able to hold the main flap and to provide a swiveling motion of the main flap.

In an advantageous embodiment, the main link has a first main link section that extends from the first main link joint in the direction of the second main link joint up to a transition region, wherein the main link has a second main link section that extends from the transition region in the direction of the second main link joint and wherein the second main link section has a larger width in a direction parallel to a swivel axis of the first main link joint than the first main link section. Hence, the route along which the second main link joint extends along the main flap clearly exceeds the route of the first main link joint along a direction parallel to said swivel axis. The cut-out to be covered by the covering flap for accommodating the main link motion, however, is dimensioned to conform the first main link section. It is therefore advantageous to dimension the first main link section to be as narrow as suitable.

The main link comprises a recess extending vertically to a swivel axis of the first main link joint and the recess may be designed for moving at least the connecting link and the covering flap through the recess when moving the main flap. As stated above, the auxiliary link and the main link cross each other due to the distanced positions of the first structurally fixed point and the second structurally fixed point and the opposite positions of the main flap and the covering flap in the retracted state. Hence, the auxiliary link and the connecting link either have to pass the motion of the main link in a side by side relationship or, as proposed, it passes the main link through the recess. By this, a symmetric introduction of loads between the main link, the connecting link and the auxiliary link is achieved.

In this regard it is mentioned that the auxiliary link may exemplarily be connected to the main link from within the recess. Hence, the first auxiliary link joint may be coupled with a surface that faces in a direction parallel to a swivel axis defined by the first auxiliary link joint. Advantageously, two opposite attachment points to couple the auxiliary link with the main link may be used.

In an advantageous embodiment, the recess extends into the second main link section. Since the second main link section advantageously has a larger width than the first main link section, the covering flap may simply pass through the recess in a region in the second main link section. As the covering flap is intended for covering the additional cut-out for accommodating the first main link section, it is of a clearly smaller width than the second main link section.

As indicated above, the covering flap has a width that exceeds the width of at least a part of the main link in a direction parallel to a swivel axis of the first main link joint. The covering flap has a width that at least slightly exceeds the width of the main link in a region around the first main link joint. Also, the covering flap has a width that is less than the width of at least a part of the main link in a direction parallel to a swivel axis of the first main link joint. In the example of the second main link section having a larger width than the first main link section the covering flap has a width that is between both widths of the main link sections.

Preferably, the second auxiliary link joint comprises a rigid connection with the covering flap. The position of the covering flap is therefore clearly defined by the motion of the auxiliary link. In order to compensate temperature- or motion-induced deformations or dimensional changes, the covering flap may comprise a certain deformability. As an alternative, the connection to the auxiliary link may allow a slight angular rotatability.

In an advantageous embodiment, the third auxiliary link joint is arranged less than 25% away from a center of the auxiliary link. Hence, the third auxiliary link joint is arranged roughly in the center of the auxiliary link. The auxiliary link may therefore provide a distinct swivelling motion induced by the connection to the main link through the connecting link.

The connecting link may further extend into the direction of the first main link joint when the main flap is in the retracted position.

The invention further relates to a wing for an aircraft, the wing comprising a leading edge region and a trailing edge region, the wing further comprising at least one system according to the above description.

It is clear that when introducing the system to the wing, a main flap is preferably supported through at least two main links, which leads to the integration of at least two auxiliary links and two connecting links for carrying two covering flaps.

Further, it is clear that a wing may be equipped with a plurality of flap systems.

Preferably, the system according to the invention is arranged in the leading edge region of the wing.

It is further preferred that the wing comprises a cut-out for receiving at least a part of the main link, wherein the covering flap is designed to cover the cut-out in the retracted position of the main flap. The covering flap constitutes a part of the aerodynamic surface of the wing when the main flap is in the retracted position. Also, the cut-out is preferably arranged at an underside of the leading edge region.

The invention further relates to an aircraft having at least one such wing.

### BRIEF DESCRIPTION OF THE DRAWINGS

Other characteristics, advantages and potential applications of the present invention result from the following description of the exemplary embodiments illustrated in the figures. In this respect, all described and/or graphically illustrated characteristics also form the object of the invention individually and in arbitrary combination regardless of their composition in the individual claims or their references to other claims. Furthermore, identical or similar objects are identified by the same reference symbols in the figures.
Fig. 1 shows a flap system according to the invention in a retracted state at a leading edge of a wing in a schematic lateral view.
Fig. 2 shows a flap system according to the invention in a half extended state at a leading edge of a wing in a schematic lateral view.
Fig. 3 shows a flap system according to the invention in an extended state at a leading edge of a wing in a schematic lateral view.
Fig. 4 shows a flap system according to the invention in an extended state at a leading edge of a wing in a three-dimensional view.
Fig. 5 shows an aircraft having wings comprising at least one flap system according to the invention.

### DETAILED DESCRIPTION OF EXEMPLARY EMBODIMENTS

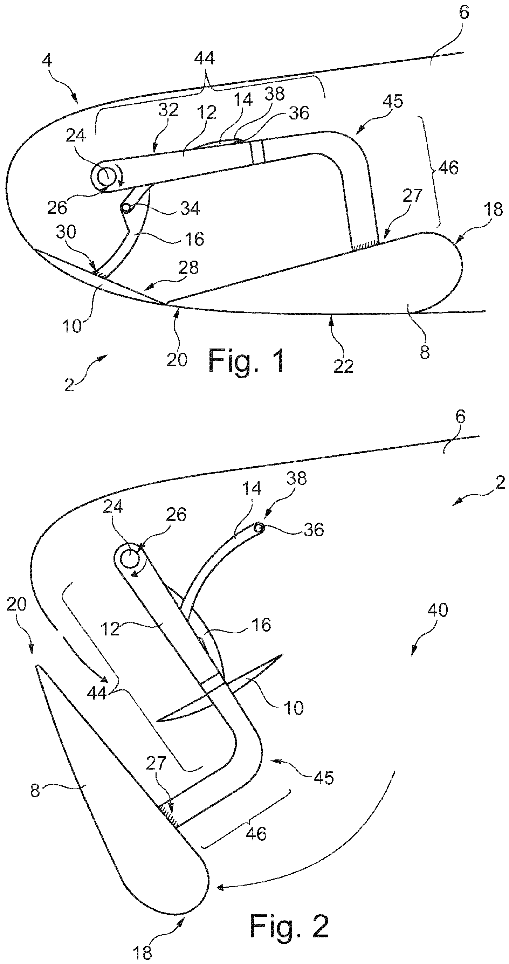

Fig. 1 shows a flap system 2 arranged in a leading edge region 4 of a wing 6 of an aircraft. The flap system 2 comprises a main flap 8, a covering flap 10, a main link 12, a connecting link 14 and an auxiliary link 16. The main flap 8 has a profile with a flap leading edge 18 and a flap trailing edge 20. It may be designed similar to a common Krueger flap and the illustration in the figures is merely schematic.

In Fig. 1, the main flap 8 is completely retracted and is placed in an underside of the wing 6. Here, the main flap 8 is in an upside-down orientation, i.e. the leading edge 18 points rearwardly, the trailing edge 20 points forwardly and an upper side 22 points downwardly. The main flap 8 can be moved into an extended position by rotating the main link 12 around a first structurally fixed point 24, at which a first main link joint 26 is placed. This motion is indicated by a curved arrow around the first structurally fixed point 24. The main flap 8 is attached to the main link 8 at a second main link joint 27, which is opposed to the first main link joint 26.

The main link 12 exemplarily comprises an L-shape. Here, a first main link section 44 that extends up to the first main link joint 26 represents a first leg of the L-shape. A second main link section 46, which is substantially arranged at a right angle to the first main link section 44 and extends up to the second main link joint 27, represents a second leg of the L-shape. Between both main link sections 44 and 46 a transition region 45 is present, which connects both main link sections 44 and 46 in a tangentially continuous manner.

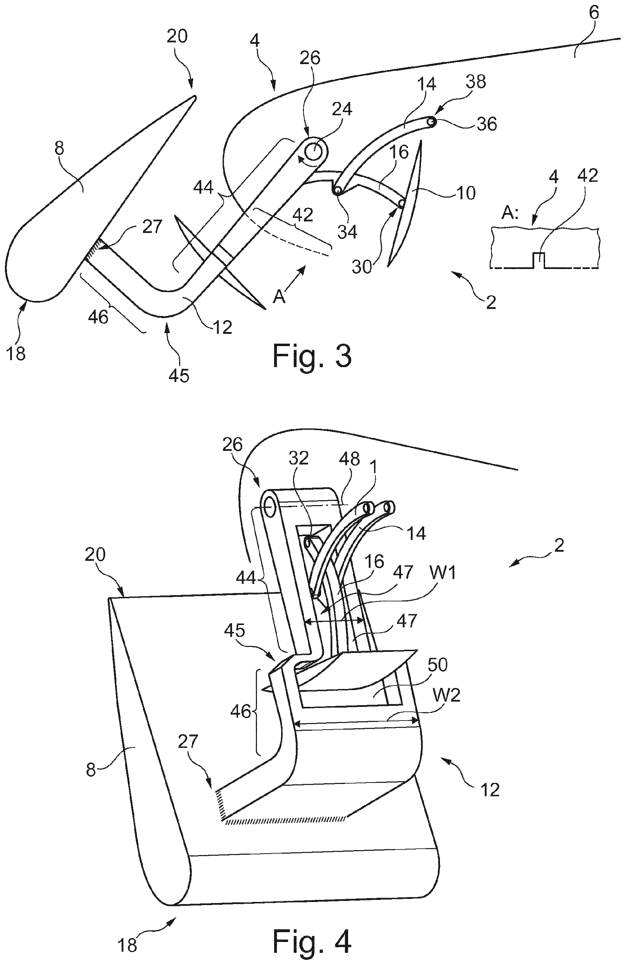

The covering panel 10 has a crescent-shaped profile and is thinner than the main flap 8. In the retracted position, the covering flap 10 is placed forward of the main flap 8 and directly connects to the trailing edge 20 of the main flap 8. As demonstrated in further figures, the covering flap 10 is intended for covering a cut-out 28 for accommodating the main link 12 during an extension motion. This is further demonstrated in Fig. 3.

The covering flap 10 is attached to the auxiliary link 16 through a second auxiliary link joint 30, while in this illustration a first auxiliary link joint 32 is hidden by the main link 12. Preferably, the second auxiliary link joint 30 is intended to rigidly hold the covering flap 10 in a fixed geometric relationship.

The auxiliary link 16 comprises a third auxiliary link joint 34, to which the connecting link 14 is attached. Additionally, the connecting link 14 comprises a first connecting link joint 36, which is attached to a second structurally fixed position 38. Said second structurally fixed position 38 is rearward of the first structurally fixed position 24.

By moving the main link 12 about the first structurally fixed point 24 and holding the connecting link 14 at the second structurally fixed point 38, the auxiliary link 16 rotates about the first auxiliary link joint 32. In the retracted position, i.e. an initial position, the connecting link 14 and the main link 12 cross each other.

In Fig. 2, the main flap 8 is actuated from the retracted (initial) position in Fig. 1 and is in the process of being moved to an extended position. The fully extended position is shown in Fig. 3, while in Fig. 2 the main flap 8 is placed between the retracted position and the fully extended position. Here, the main link 12 is moved about approximately 70° from the retracted position and the main flap 8 is clearly moved out of a recess 40, which is provided for accommodating the main flap 8 at an underside of the wing 6. Due to the connecting link 14 being held at the second structurally fixed point 38 by the first connecting link joint 36, the auxiliary link 16 is urged into an anti-clockwise rotation. The main link 12, however, rotates in a clockwise direction. During this motion, the covering flap 10 is moved rearwardly and passes the main link 12. Also, the auxiliary link 16 is arranged to conform the position of the main link 12. In this state, the main flap 8 and the covering flap 10 have changed their position order along a longitudinal axis, i.e. along the forward or rearward direction. The main flap 8 is almost completely forward of the covering flap 10.

In Fig. 3, the extension motion of the main flap 8 is completed. Here, it is visible that the main link 12 is forward of the trailing edge 20 in the retracted position of the main link 8 (see Fig. 1). Here, the required additional cut-out 42 in the leading edge region 4 of the wing 6 is indicated by dashed lines. The cut-out 42 will be closed in the retracted position of the main flap 8 through the covering flap 10, but is now completely open to accommodate the main link 12.

In Fig. 3, the spatial relationship between the connecting link 14 and the auxiliary link 16 is further illustrated. Exemplarily, the connecting link 14 has a curved shape similar to a curved shape of the auxiliary link 16. The fixed length of the connecting link 14 leads to pulling the third auxiliary link joint 34 rearwardly away from the main link 12, thereby placing the covering flap 10 in a rearward position. The auxiliary link 16, the connecting link 14 as well as the second structurally fixed point 38 are chosen to place the covering flap 10 into a position as upwardly as possible and as inwardly as possible to reduce the additional aerodynamic resistance caused by the covering flap 10 in the extended position of the main flap 8.

It may also be preferred to arrange the resting surfaces and corresponding contacting surfaces of the covering flap in such manner that the covering flap experiences a certain pre-tension force between the resting surfaces and a rim section of the covering flap. The pre-tension force supports an exact alignment of the covering flap relative to the cut-out.

Fig. 4 provides a good overview of the flap system 2 in a three-dimensional view from below the flap system 2. Here, the different sections 44 and 46 of the main link 12 are apparent. The first main link section 44 and the second main link section 46 have different widths in a direction parallel to a swivel axis 48 of the first main link joint 26. Here, the first main link section 44 comprises a clearly smaller width w1 than the second main link section 46, which has a width w2. Exemplarily, w2 may be twice w 1.

A recess 50 is apparent in the main link 12, which extends through the main link 12 vertically to the swivel axis 48. Due to the different widths of the main link section 44 and 46, the recess 50 is designed to have a T-shape. A wider part of the T-shape is arranged in the second main link section 46, while the narrower part of the T-shape is arranged in the first main link section 44. Since the cut-out 42 for accommodating the main link 12 only needs to receive the first main link section 44, the covering flap 10 only needs to cover a width slightly larger than the width w1 of the first main link section 44. This allows the covering flap 10 to pass through the recess 50. The auxiliary link 16, however, is able to pass through the part of the recess 50 arranged in the first main link section 44.

Due to the symmetric design of the main link 12, the auxiliary link 16 and the covering flap 10, it is advantageous to use two connecting links 14 instead of just one connecting link 14. They may be arranged parallel to each other to symmetrically enclose the auxiliary link 16. The arrangement of two connecting links 14 and one auxiliary link 16 is able to pass through the recess 50 as well. However, also a single connecting link 14 and two auxiliary links 16 may be used instead. In this case, the two auxiliary links 16 enclose the connecting link 14.

The first auxiliary link joint 32 may be placed inside the recess 50 and furthermore allows a very space-efficient design. For this purpose, the first main link section 44 may comprise two inner surfaces 47 that face each other. Here, two devices for coupling two first auxiliary link joints 32 are arranged. The devices may be threaded bore holes or other suitable devices.

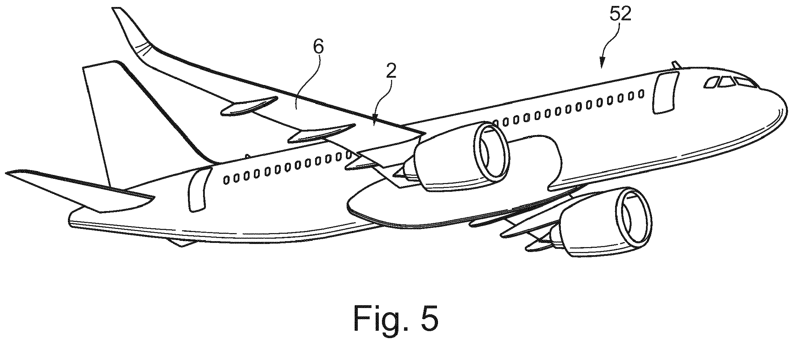

Lastly, Fig. 5 shows an aircraft 52 having wings 6, which are equipped with flap systems 2 according to the previous drawings. For the sake of simplification, only potential installation positions are indicated, but recesses or cut-outs are left open.

In addition, it should be pointed out that "comprising" does not exclude other elements or steps, and "a" or "an" does not exclude a plural number. Furthermore, it should be pointed out that characteristics or steps which have been described with reference to one of the above exemplary embodiments may also be used in combination with other characteristics or steps of other exemplary embodiments described above. Reference characters in the claims are not to be interpreted as limitations.

## Claims

1. A flap system (2) for driving a flap arrangement between a retracted position and an extended position, the system (2) comprising:
- a main flap (8),
- a covering flap (10),
- a main link (12),
- an auxiliary link (16) and
- a connecting link (14),
wherein the main link (12) comprises a first main link joint (26) for rotatably supporting the main link (12) on a first structurally fixed point (24), and a second main link joint (27) rigidly coupled with the main flap (8),
wherein the connecting link (14) comprises a first connecting link joint (36) for rotatably supporting the connecting link (14) on a second structurally fixed point (38), which is located rearward of the first structurally fixed point (26), and further comprises a second connecting link joint (32),
wherein the auxiliary link (16) comprises a first auxiliary link joint (32) coupled with the main link (12) at a distance to the first main link joint (26), and further comprises a second auxiliary link joint (30) coupled with the covering flap (10),
wherein the second connecting link joint (32) is coupled with the auxiliary link (16) at a third auxiliary link joint (34) between the first auxiliary link joint (32) and the second auxiliary link joint (30), for rotatably supporting the connecting link (14) on the auxiliary link (16), and
wherein the connecting link (14), the auxiliary link (16) and the main link (12) are arranged to actively place the covering flap (10) forward of the main flap (8) in a retracted position of the main flap (8) and rearward of the main flap (8) in at least one extended position of the main flap (8).

2. The system (2) of claim 1,
wherein the main link (12) has an L-shape.

3. The system (2) of claim 1 or 2,
wherein the main link (12) has a first main link section (44) that extends from the first main link joint (26) in the direction of the second main link joint (27) up to a transition region (45),
wherein the main link (12) has a second main link section (46) that extends from the transition region (45) in the direction of the second main link joint (27), and
wherein the second main link section (46) has a width (w2) in a direction parallel to a swivel axis (48) of the first main link joint (26) that is greater than a width (w1) of the first main link section (44).

4. The system (2) of any of the preceding claims,
wherein the main link (12) comprises a recess (50) extending vertically to a swivel axis (48) of the first main link joint (26), and
wherein the recess (50) is designed for moving at least the connecting link (14) and the covering flap (10) through the recess (50) when moving the main flap (8).

5. The system (2) of claims 3 and 4,
wherein the recess (50) extends into the second main link section (46).

6. The system (2) of any of the preceding claims,
wherein the covering flap (10) has a width that exceeds the width (w1, w2) of at least a part of the main link (12) in a direction parallel to a swivel axis (48) of the first main link joint (44).

7. The system (2) of any of the preceding claims,
wherein the second auxiliary link joint (30) comprises a rigid connection with the covering flap (10).

8. The system (2) of any of the preceding claims,
wherein the third auxiliary link joint (34) is arranged less than 25% away from a center of the auxiliary link (16).

9. The system (2) of any of the preceding claims,
wherein the connecting link (14) extends into the direction of the first main link joint (26) when the main flap (8) is in the retracted position.

10. A wing (6) having a leading edge region (4) and a trailing edge region, as well as at least one system (2) according to any of the claims 1 to 9 installed inside the wing (6).

11. The wing (6) according to claim 10, the system (2) arranged in the leading edge region (4).

12. The wing (6) according to claim 10 or 11, wherein the wing (6) comprises a cut-out (42) for receiving at least a part of the main link (12), and wherein the covering flap (10) is designed to cover the cut-out (42) in the retracted position of the main flap (8).

13. An aircraft (52) having at least one wing (6) according to any of the claims 10 to 12.
